# EUROPEAN PATENT SPECIFICATION

(11) **EP 1 799 953 B1**
(45) Date of publication and mention of the grant of the patent: **16.10.2013**
(21) Application number: 05770398.5
(22) Date of filing: 18.08.2005
(51) Int. Cl.: E21D 19/00, E21F 13/00, B60R 21/11, B62D 33/06

(54) **ROCK DRILLING RIG, SERVICE PLATFORM CONNECTED TO A ROCK DRILLING RIG AND A ROOF FOR A SERVICE PLATFORM**
GESTEINSBOHRGERÄT, MIT EINEM GESTEINSBOHRGERÄT VERBUNDENE WARTUNGSPLATTFORM UND DACH FÜR EINE WARTUNGSPLATTFORM
APPAREIL DE FORAGE DE ROCHES, PLATE-FORME DE SERVICE RELIEE A L'APPAREIL DE FORAGE DE ROCHES ET TOIT POUR LA PLATE-FORME DE SERVICE

(30) Priority: 07.09.2004 SE 0402134
(43) Date of publication of application: 27.06.2007
(73) Proprietor: Atlas Copco Rock Drills AB, SE-701 91 Orebro (SE)
(72) Inventor: ÖBERG, Peter, S-702 29 Örebro (SE); NILSSON, Peter, 355 92 Växjo (SE)
(86) International application number: PCT/SE2005/001217
(87) International publication number: WO 2006/041343

(56) References cited:
- US-A- 3 865 197
- US-A- 3 893 520
- US-A- 4 079 792
- US-A- 4 256 186
- US-A- 4 395 163

## Description

### Field of the invention

The present invention concerns a rock drilling rig and more in particular a rock drilling rig provided with a service platform with a protective roof. The protective roof is pivotal between a protection position above the service platform and a position where the space above the service platform is freely accessible without obstruction from the protective roof.

### Background of the invention

In underground rock working, the service platform has to be provided with an approved protective roof if work is performed below an unsecured rock roof. If the rock roof above the service platform has been secured by means of rock bolts or in any other way it is sometimes desirable to perform work without being obstructed by the protective roof.

According to a previously known construction, a fixed protective roof is used. According to another previously known construction, as disclosed by US 3865197, a vertically adjustable roof is used. Hereby the roof posts are comprised of pipes that are displaceable with respect to each other by means of hydraulic cylinders. These solutions have the drawback that they can be obstructive with respect to work below secured roof. Then there is the risk that the protective roof is removed and subsequently remains removed when working below unsecured roof. This is quite unacceptable from a security point of view. The vertically adjustable protective roof further has the drawback that the construction becomes heavy and that it is still in the way when the protective roof is not necessary.

### Summary of the invention

The present invention as defined in the following claims aims at providing a rock drilling rig which is provided with a strong protective roof above the service platform that can be easily swung away, when it is not needed, to a position beside the service platform.

### Brief description of the drawings

An embodiment of the invention is described below with reference to the annexed drawing, wherein:

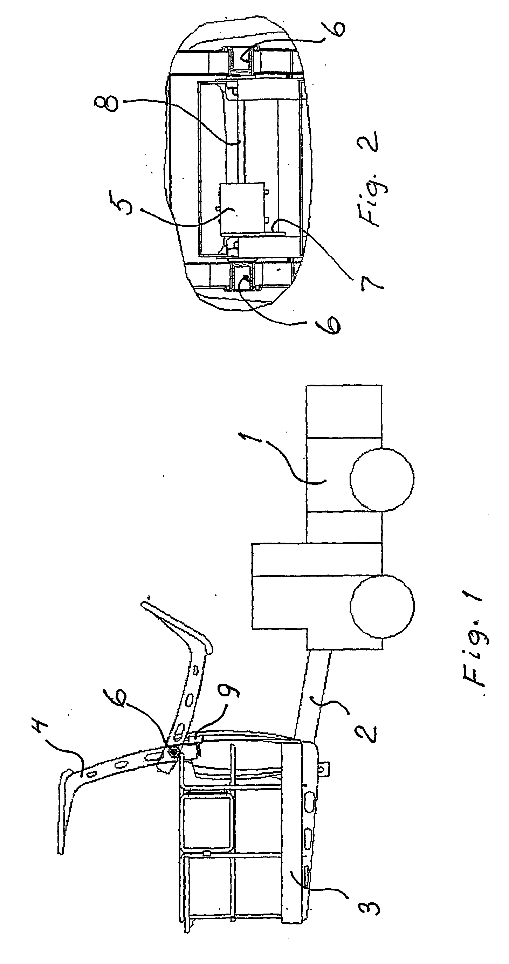

Figure 1 diagrammatically shows a rock drilling rig in a side view.
Figure 2 shows a part of the device of figure 1.

### Detailed description of embodiments

The rock drilling rig shown in the drawing includes a carrier 1. A beam 2 is as customary pivotally connected to the carrier 1. A service platform 3 is as customary pivotally connected to the beam 2. A protective roof 4 is pivotally connected to the service platform 3, which is indicated by means of bearings 6. The pivoting action is achieved by means of a turning device 5 in the form of a hydraulic motor. The casing of the turning device 5 is connected to the service platform 3 over a protrusion 7. The roof 4 is swung by means of the axis 8 of the turning device 5. The service platform 3 is provided with stops 9 that take up the torsional moment around the bearings 6 in case of possibly falling rocks. The bearings 6 thereby only take up the vertical forces.

The protective roof construction is preferably made from ultra high-strength steel in order to achieve a light and strong construction.

Thus, the rock drilling rig including a carrier 1, a beam 2 that is pivotally connected to the carrier 1, a service platform 3 that is pivotally connected to the beam 2 and a roof 4 that is connected to the service platform 3. The roof 4 is by means of a turning device 5 pivotally connected to the service platform 3 between a position above the service platform 3 and a position beside the service platform 3. The roof 4 is connected to the service platform 3, by means of bearings 6. The roof 4 is swung around the bearings 6 by means of an axis 8 of the turning device 5. The service platform 3 is provided with stops 9 that take up the torsional moment of the roof 4 around the bearings 6 in case of possibly falling rocks. The turning device 5 is in the form of a hydraulic motor.

## Claims

1. Rock drilling rig including a carrier (1), a beam (2) which is pivotally connected to the carrier (1), a service platform (3) which is pivotally connected to the beam (2), and a roof (4) which is connected to the service platform (3), **characterized in that** the roof (4) by means of a turning device (5) is pivotally connected to the service platform (3) between a position above the service platform (3) and a position beside the service platform (3).

2. Rock drilling rig according to claim 1, **characterized in that** the roof (4) is connected to the service platform (3), by means of bearings (6).

3. Rock drilling rig according to claim 2, **characterized in that** the roof (4) is swung around the bearings (6) by means of an axis (8) of the turning device (5).

4. Rock drilling rig according to claim 3, **characterized in that** the service platform (3) is provided with stops (9) that take up the torsional moment of the roof (4) around the bearings (6) in case of possibly falling rocks.

5. Rock drilling rig according to any of the claims 1 to 4, **characterized in that** the turning device (5) is in the form of a hydraulic motor.

## Patentansprüche

1. Gesteinsbohranlage mit einem Transporter (1), einem Ausleger (2), der schwenkbar mit dem Transporter (1) verbunden ist, einer Serviceplattform (3), die schwenkbar mit dem Ausleger (2) verbunden ist, und einem Dach (4), das mit der Serviceplattform (3) verbunden ist, **dadurch gekennzeichnet, dass** das Dach (4) mit Hilfe einer Schwenkvorrichtung (5) zwischen einer Position über der Serviceplattform (3) und einer Position neben der Serviceplattform (3) schwenkbar mit der Serviceplattform (3) verbunden ist.

2. Gesteinsbohranlage nach Anspruch 1, **dadurch gekennzeichnet, dass** das Dach (4) mit der Serviceplattform mit Hilfe von Lagern (6) verbunden ist.

3. Gesteinsbohranlage nach Anspruch 2, **dadurch gekennzeichnet, dass** das Dach (4) um die Lager (6) mit Hilfe einer Achse (8) der Schwenkvorrichtung (5) geschwenkt wird.

4. Gesteinsbohranlage nach Anspruch 3, **dadurch gekennzeichnet, dass** die Serviceplattform (3) mit Anschlägen (9) versehen ist, die das Drehmoment des Daches (4) um die Lager (6) im Falle gegebenenfalls fallender Gesteinsbrocken aufnehmen.

5. Gesteinsbohranlage nach einem der Ansprüche 1 bis 4, **dadurch gekennzeichnet, dass** die Schwenkvorrichtung (5) in Form eines Hydraulikmotors vorliegt.

## Revendications

1. Équipement de forage de roche comportant entre autres un porteur (1), une poutre (2) qui est connectée par un pivot au porteur (1), une plate-forme de service (3) qui est connectée par un pivot à la poutre (2), et un toit (4) qui est connecté à la plate-forme de service (3), **caractérisé en ce que** le toit (4) au moyen d'un dispositif de rotation (5) est connecté par un pivot à la plate-forme de service (3) entre une position au-dessus de la plate-forme de service (3) et une position voisine de la plate-forme de service (3).

2. Équipement de forage de roche selon la revendication 1, **caractérisé en ce que** le toit (4) est connecté à la plate-forme de service (3) au moyen de paliers (6)

3. Équipement de forage de roche selon la revendication 21, **caractérisé en ce que** le toit (4) oscille autour des paliers (6) au moyen d'un axe (8) du dispositif de rotation (5).

4. Équipement de forage de roche selon la revendication 3, **caractérisé en ce que** la plate-forme de service (3) est munie de butées (9) qui reprennent le moment de torsion du toit (4) autour des paliers (6) en cas de chute éventuelle de roche.

5. Équipement de forage de roche selon l'une des revendications 1 à 4, **caractérisé en ce que** le dispositif de rotation (5) prend la forme d'un moteur hydraulique.
